# EUROPEAN PATENT SPECIFICATION

(11) **EP 3 571 242 B1**
(45) Date of publication and mention of the grant of the patent: **21.10.2020**
(21) Application number: 18700118.5
(22) Date of filing: 09.01.2018
(51) Int. Cl.: C08G 77/46, C08G 65/48

(54) **NEW MEMBRANES**
NEUE MEMBRANEN
NOUVELLES MEMBRANES

(30) Priority: 19.01.2017 EP 17152182
(43) Date of publication of application: 27.11.2019
(73) Proprietor: BASF SE, 67056 Ludwigshafen am Rhein (DE)
(72) Inventor: STAUDT, Claudia, Shanghai 200137 (CN); FU, Xiao, Singapore 117525 (SG); WIDJOJO, Natalia, Singapore 038987 (SG); JUNG, Marc Rudolf, 67056 Ludwigshafen (DE); LOO, Lee May, Singapore 670511 (SG)
(74) Representative: BASF IP Association
(86) International application number: PCT/EP2018/050394
(87) International publication number: WO 2018/134074

(56) References cited:
- US-A- 5 177 156
- ZHENG JIFU ET AL: "Self-assembly prepared anion exchange membranes with high alkaline stability and organic solvent resistance", JOURNAL OF MEMBRANE SCIENCE, ELSEVIER BV, NL, vol. 522, 16 September 2016 (2016-09-16), pages 159-167, XP029774600, ISSN: 0376-7388, DOI: 10.1016/J.MEMSCI.2016.09.021
- ZHANG Q ET AL: "Synthesis and alkaline stability of novel cardo poly(aryl ether sulfone)s with pendent quaternary ammonium aliphatic side chains for anion exchange membranes", POLYMER, ELSEVIER SCIENCE PUBLISHERS B.V, GB, vol. 51, no. 23, 29 October 2010 (2010-10-29), pages 5407-5416, XP027437380, ISSN: 0032-3861 [retrieved on 2010-10-23]
- DATABASE WPI Week 198702 Thomson Scientific, London, GB; AN 1987-012212 XP002779508, -& JP S61 271328 A (SAGAMI CHEM RES CENTRE) 1 December 1986 (1986-12-01)

## Description

The present invention is directed to polymers P prepared from at least one hydroxy terminated polyaryleneether HA and at least one siloxane S, wherein said siloxane S is a a polysiloxane prepared from tetraalkylorthosilicate and at least one siloxane according to formula I. 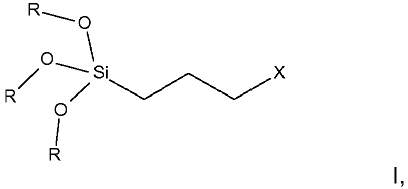 wherein R is an alkyl group and X is a leaving group.

The present invention is further directed to processes for making polymers P as well as membranes comprising polymers P.

Different types of membranes play an increasingly important role in many fields of technology. In particular, methods for treating water rely more and more on membrane technology.

There is a need for membranes with excellent separation characteristics having improved mechanical stabilities.

ZHENG JIFU et al: "Self-assembly prepared anion exchange membranes with high alkaline stability and organic solvent resistance", Journal of Membrane Science, Elsevier BV, NL, Vol.522, 16. September 2016 (2016-09-16), pages 159 - 167 disclose a polymer used to prepare obtained by reacting a cardo poly(aryl ether sulfone ketone with a silane. DATABAES WPI, Week 198702; Thomson Scientific, London, GB; AN 1987-012212 & JP S61 271328 A (SAGAMI CHEM RES CENTRE) 1. December 1986 (1986-12-01) disclose membranes prepared from a polymer obtained by reacting a hydroxy terminated polyaryleneether with a silane or a polysiloxane.

Wang and co-workers (Journal of Membrane Science 464 (2014) 8 -19) added solvent N-methylpyrrolidone (NMP) to coagulation bath to suppress the formation of macrovoids, hence the pressure resistance of the membranes increased.

P. Aerts (Separation and Purification Technology 22-23 (2001) 663-669) fabricated ZrO₂ particles to the polymeric matrix and found it influence the membrane permeability as well as compression of the membrane structure.

Similar inorganic particles were also reported: titanium isopropoxide (TiP) modified cellulose acetate membrane dramatically improved the creep behavior of treated porous CA membranes, whereby the total compressive strain decreases by as much as 70% relative to the untreated materials (International Journal of Polymer Anal. Charact., 7: 162-180, 2002:).

Phosphorylated TiO₂-SiO₂ particles in PSF membrane to have better anti-compaction characterization (Desalination 324 (2013) 118-126).

Graphene-based hierarchical fillers to PSF membranes (water research 47 (2013) 3984-3996). A new method was proposed to prepare PVDF/SiO2 hybrid membranes by TIPS followed by the sol-gel process. Si02 particles are uniformly distributed inside the membranes. The tubular pore size, surface porosity and overall porosity decrease with TEOS in the ternary mixture. The surface hydrophilicity, pure water flux and mechanical properties can be obviously improved with the formation of Si02 particles in the hybrid membranes. Moreover, the hybrid membranes possess excellent anti-compression property due to the supporting effect of inorganic SiO₂ particles. (Journal of Membrane Science 465 (2014) 56-67.)

It was therefore an objective of the present invention to provide materials suitable for making membranes with improved mechanical stabilities and excellent separation characteristics.

This objective is reached through polymers P prepared from at least one hydroxy terminated polyaryleneether HA and at least one siloxane S, wherein said siloxane S a polysiloxane prepared from tetraalkylorthosilicate and at least one siloxane according to formula I. 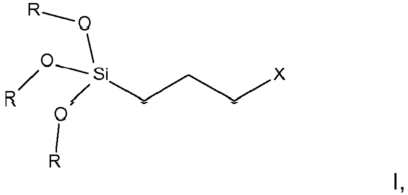 wherein R is an alkyl group and X is a leaving group.

When reference is made herein to a polymer "comprising" such siloxanes S, this shall be understood to mean that such polymers are obtained by reaction of a starting compound, such as polyaryleneether HA with such siloxanes S. For example, starting compounds like polyaryleneethers HA can react with siloxanes S through substitution of a leaving group X originating from siloxanes according to formula I, for example with OH groups under formation of an ether group, or through condensation of OH groups from the starting compound with OR or OH groups present in siloxanes S.

Analogously, when reference is made herein to siloxanes S "comprising" such siloxanes according to formula I, this shall be understood to mean that such siloxanes S are prepared through reaction of siloxanes according to formula I with further siloxanes or polysiloxanes, for example through condensation of OH or OR groups from said further siloxanes or polysiloxanes with OR or OH groups present in siloxanes according to formula I.

Suitable polyarylene ethers HA are known as such to those skilled in the art and can be formed from polyarylene ether units of the general formula II 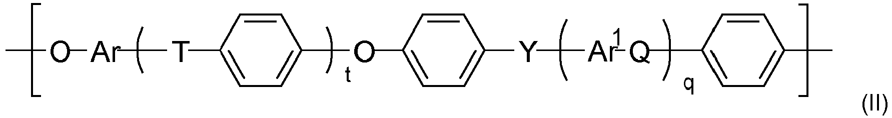 with the following definitions:
t, q: each independently 0, 1, 2 or 3,
Q, T, Y: each independently a chemical bond or group selected from -O-, -S-, -SO₂-, S=O, C=O, -N=N-, -CR^{a}R^{b}- where R^{a} and R^{b} are each independently a hydrogen atom or a C₁-C₁₂-alkyl, C₁-C₁₂-alkoxy or C₆-C₁₈-aryl group, where at least one of Q, T and Y is not -O-, and at least one of Q, T and Y is -SO₂-, and
Ar, Ar¹: each independently an arylene group having from 6 to 18 carbon atoms,
wherein the aromatic moieties are partly sulfonated.

Optionally the aromatic rings as contained independently of each other may be further substituted. In one embodiment the aromatic moieties are partly sulfonated.

The term "sulfonated" means that such sulfonated arylene moieties contain a sulfonate -SO₃⁻ group or sulfonic acid group -SO₃H bound to an aromatic ring.

Suitable polyarylene ethers HA can be provided by reacting at least one starting compound of the structure X-Ar-Y (M1) with at least one starting compound of the structure HO-Ar¹-OH (M2) in the presence of a solvent (L) and of a base (B), where
- Y is a halogen atom,
- X is selected from halogen atoms and OH, preferably from halogen atoms, especially F, Cl or Br, and
- Ar and Ar¹ are each independently an arylene group having 6 to 18 carbon atoms.

If Q, T or Y, with the abovementioned prerequisites, is a chemical bond, this is understood to mean that the group adjacent to the left and the group adjacent to the right are bonded directly to one another via a chemical bond.

Preferably, Q, T and Y in formula (II), however, are independently selected from -O- and -SO₂-, with the proviso that at least one of the group consisting of Q, T and Y is -SO₂-.

When Q, T or Y are -CR^{a}R^{b}-, R^{a} and R^{b} are each independently a hydrogen atom or a C₁-C₁₂-alkyl, C₁-C₁₂-alkoxy or C₆-C₁₈-aryl group.

Preferred C₁-C₁₂-alkyl groups comprise linear and branched, saturated alkyl groups having from 1 to 12 carbon atoms. Particularly preferred C₁-C₁₂-alkyl groups are: C₁-C₆-alkyl radicals such as methyl, ethyl, n-propyl, isopropyl, n-butyl, sec-butyl, 2- or 3-methylpentyl and longer-chain radicals such as unbranched heptyl, octyl, nonyl, decyl, undecyl, lauryl, and the singularly or multiply branched analogs thereof.

Useful alkyl radicals in the aforementioned usable C₁-C₁₂-alkoxy groups include the alkyl groups having from 1 to 12 carbon atoms defined above. Cycloalkyl radicals usable with preference comprise especially C₃-C₁₂-cycloalkyl radicals, for example cyclopropyl, cyclobutyl, cyclopentyl, cyclohexyl, cycloheptyl, cyclooctyl, cyclopropylmethyl, cyclopropylethyl, cyclopropylpropyl, cyclobutylmethyl, cyclobutylethyl, cyclpentylethyl, -propyl, -butyl, -pentyl, -hexyl, cyclohexylmethyl, -dimethyl, -trimethyl.

Ar and Ar¹ are each independently a C₆-C₁₈-arylene group. Proceeding from the starting materials described below, Ar is preferably derived from an electron-rich aromatic substance which is preferably selected from the group consisting of hydroquinone, resorcinol, dihydroxynaphthalene, especially 2,7-dihydroxynaphthalene, and 4,4'-bisphenol. Ar¹ is preferably an unsubstituted C₆- or C₁₂-arylene group.

Useful C₆-C₁₈-arylene groups Ar and Ar¹ are especially phenylene groups, such as 1,2-, 1,3- and 1,4-phenylene, naphthylene groups, for example 1,6-, 1,7-, 2,6- and 2,7-naphthylene, and the arylene groups derived from anthracene, phenanthrene and naphthacene.

Preferably, Ar and Ar¹ in the preferred embodiments of the formula (II) are each independently selected from the group consisting of 1,4-phenylene, 1,3-phenylene, naphthylene, especially 2,7-dihydroxynaphthalene, and 4,4'-bisphenylene.

Units present with preference within the polyarylene ether HA are those which comprise at least one of the following repeat structural units IIa to IIo:

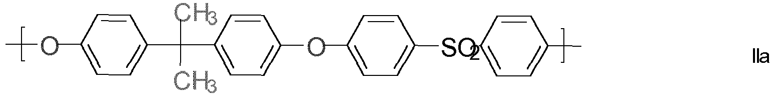

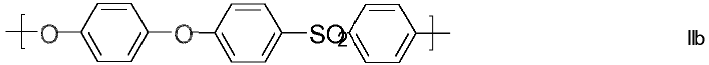

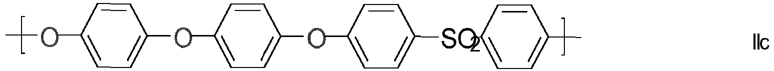

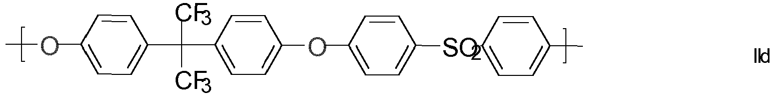

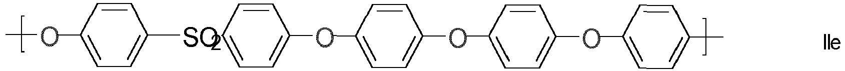

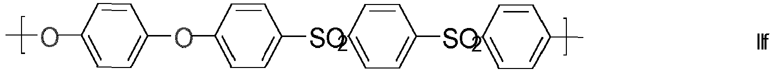

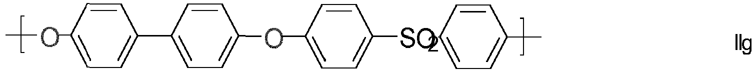

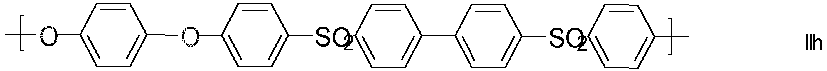

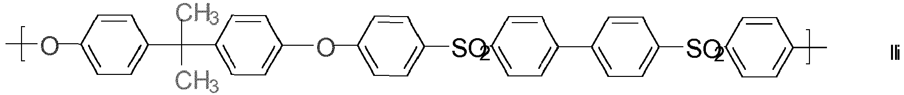

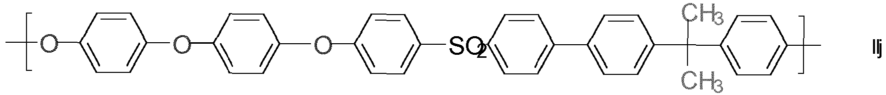

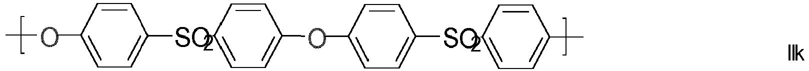

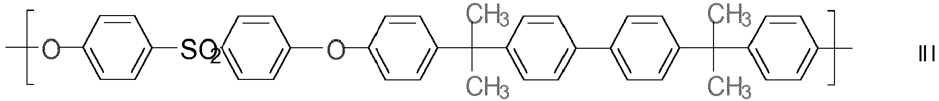

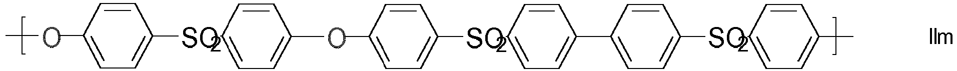

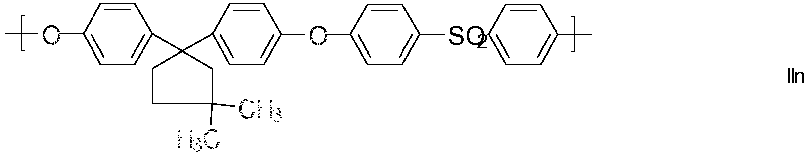

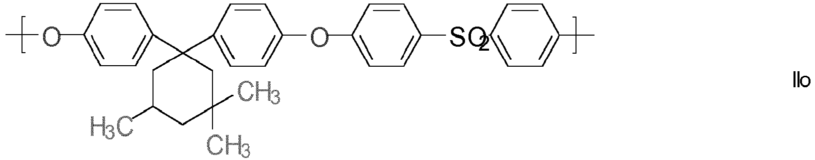

In addition to the units la to lo present with preference, preference is also given to those units in which one or more 1,4-dihydroxyphenyl units are replaced by resorcinol or dihydroxynaphthalene units.

Particularly preferred units of the general formula II are units IIa, IIg and IIk. It is also particularly preferred when the sulfonated polyarylene ether Are formed essentially from one kind of units of the general formula I, especially from one unit selected from IIa, IIg and IIk.

In a particularly preferred embodiment, Ar = 1,4-phenylene, t = 1, q = 0, T = SO₂ and Y = SO₂. Such polyarylene ethers are referred to as polyether sulfone (PESU).

In another particularly preferred embodiment, Ar = 1,4-biphenylene, t = 0, q = 0 and Y = SO₂. Such polyarylene ethers are referred to as polyphenylene sulfones (PPSU).

Suitable polyarylene ethers HA preferably have a mean molecular weight Mn (number average) in the range from 2000 to 70000 g/mol, especially preferably 5000 to 40000 g/mol and particularly preferably 7000 to 30000 g/mol. The average molecular weight of the polyarylene ether HA can be controlled and calculated by the ratio of the monomers forming the polyarylene ether HA, as described by H.G. Elias in "An Introduction to Polymer Science" VCH Weinheim, 1997, p. 125.

Suitable starting compounds are known to those skilled in the art and are not subject to any fundamental restriction, provided that the substituents mentioned are sufficiently reactive within a nucleophilic aromatic substitution.

Preferred starting compounds are difunctional. "Difunctional" means that the number of groups reactive in the nucleophilic aromatic substitution is two per starting compound. A further criterion for a suitable difunctional starting compound is a sufficient solubility in the solvent, as explained in detail below.

Preference is given to monomeric starting compounds, which means that the reaction is preferably performed proceeding from monomers and not proceeding from prepolymers.

The starting compound (M1) used is preferably a dihalodiphenyl sulfone. The starting compound (M2) used is preferably 4,4'-dihydroxydiphenyl sulfone or 4,4'-dihydroxybiphenyl.

Suitable starting compounds (M1) are especially dihalodiphenyl sulfones such as 4,4'-dichlorodiphenyl sulfone, 4,4'-difluorodiphenyl sulfone, 4,4'-dibromodiphenyl sulfone, bis(2-chlorophenyl) sulfones, 2,2'-dichlorodiphenyl sulfone and 2,2'-difluorodiphenyl sulfone, particular preference being given to 4,4'-dichlorodiphenyl sulfone and 4,4'-difluorodiphenyl sulfone.

Preferably starting compound (M1) is a dihalodiphenyl sulfone (M1) such as 4,4'-dichlorodiphenyl sulfone.

Preferred compounds (M2) are accordingly those having two phenolic hydroxyl groups.

Phenolic OH groups are preferably reacted in the presence of a base in order to increase the reactivity toward the halogen substituents of the starting compound (M1).

Preferred starting compounds (M2) having two phenolic hydroxyl groups are selected from the following compounds:
- dihydroxybenzenes, especially hydroquinone and resorcinol;
- dihydroxynaphthalenes, especially 1,5-dihydroxynaphthalene, 1,6- dihydroxynaphthalene, 1,7-dihydroxynaphthalene, and 2,7-dihydroxynaphthalene;
- dihydroxybiphenyls, especially 4,4'-biphenol and 2,2'-biphenol;
- bisphenyl ethers, especially bis(4-hydroxyphenyl) ether and bis(2-hydroxyphenyl) ether;
- bisphenylpropanes, especially 2,2-bis(4-hydroxyphenyl)propane, 2,2-bis(3-methyl-4-hydroxyphenyl)propane and 2,2-bis(3,5-dimethyl-4-hydroxyphenyl)propane;
- bisphenylmethanes, especially bis(4-hydroxyphenyl)methane;
- bisphenyl sulfones, especially bis(4-hydroxyphenyl) sulfone;
- bisphenyl sulfides, especially bis(4-hydroxyphenyl) sulfide;
- bisphenyl ketones, especially bis(4-hydroxyphenyl) ketone;
- bisphenylhexafluoropropanes, especially 2,2-bis(3,5-dimethyl-4-hydroxyphenyl)hexafluoropropane; and
- bisphenylfluorenes, especially 9,9-bis(4-hydroxyphenyl)fluorene;
- 1,1-Bis(4-hydroxyphenyl)-3,3,5-trimethyl-cyclohexane (bisphenol TMC).

An especially preferred starting compound (M2) is 4,4'-dihydroxybiphenyl.

It is preferable, proceeding from the aforementioned aromatic dihydroxyl compounds (M2), by addition of a base (B), to prepare the dipotassium or disodium salts thereof and to react them with the starting compound (M1). The aforementioned compounds can additionally be used individually or as a combination of two or more of the aforementioned compounds.

Hydroquinone, resorcinol, dihydroxynaphthalene, especially 2,7-dihydroxynaphthalene, bisphenol A, dihydroxydiphenyl sulfone and 4,4'-bisphenol are particularly preferred as starting compound (M2).

However, it is also possible to use trifunctional compounds. In this case, branched structures are the result. If a trifunctional starting compound (M2) is used, preference is given to 1,1,1-tris(4-hydroxyphenyl)ethane.

The ratios to be used derive in principle from the stoichiometry of the polycondensation reaction which proceeds with theoretical elimination of hydrogen chloride, and are established by the person skilled in the art in a known manner.

In a preferred embodiment, the ratio of halogen end groups to phenolic end groups is adjusted by controlled establishment of an excess of the dihalogen starting compound (M1) in relation to a difunctional compound (M2) as starting compound are employed.

More preferably, the molar (M1)/(M2) ratio in this embodiment is from 1.003 to 1.25, especially from 1.005 to 1.15, most preferably from 1.01 to 1.1.

Alternatively, it is also possible to use a starting compound (M1) where X = halogen and Y = OH. In this case, the ratio of halogen to OH end groups used is preferably from 1.003 to 1.2, especially from 1.005 to 1.15, most preferably 1.01 to 1.1.

Preferably, the conversion in the polycondensation is at least 0.9, which ensures a sufficiently high molecular weight.

Siloxane S is a a polysiloxane prepared from tetraorthosilicate and at least one siloxane according to formula I

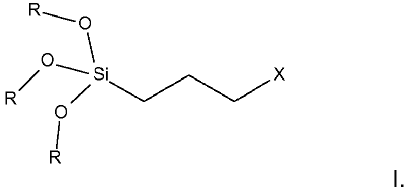

Therein, R is an alkyl group and X is a leaving group.

When reference is made herein to a polysiloxane or a polymer comprising a siloxane according to formula I, this shall be understood to mean that such polysiloxanes or polymers comprise siloxanes according to formula I in reacted form. For example siloxanes may be comprised in polysiloxanes as the reaction product of a condensation reaction of hydroxy or alkoxy groups of other siloxanes or polymers or of other nucleophilic groups that may be present in polysiloxanes or polymers so that some or all of the OR groups have been eliminated from siloxanes according to formula I. Alternatively it is possible that the leaving group X in formula I has been replaced in a substitution reaction, for example under formation of an ether group (e.g. resulting from reaction with OH groups present in polyaryleneether HA).

R in formula I is preferably C₁ to C₄ alkyl.
Preferably, R is methyl or ethyl.
Especially preferably, R is methyl.

X in formula I can in principle be any leaving group than can be replaced by terminal groups present in polyaryleneether HA or a polysiloxane in a substitution reaction.
Preferably, X is selected from Cl, Br, I, tosylate, triflate, carbonate, methyl sulfate, mesylate.
Especially preferably, X is selected from Cl, Br and I.
Especially preferably, X is I.
Polysiloxanes normally have a molar mass MW of 3000 to 5000 (determined by GPC run in THF with polystyrene standard, see Macromolecules, Vol. 39, No. 5, 2006, 1701-1707).

Polymers P normally comprise 90 to 99.9 % by weight, preferably 93 to 99 % by weight and more preferably 95 to 97 % by weight of at least one polyaryleneether HA and normally 0.1 to 10 % by weight, preferably 1 to 7 % by weight and more preferably 3 to 5 % by weight of at least one polysiloxane S.

Polysiloxanes S are obtained by polycondensation of siloxanes according to formula I and at least one polysiloxane obtained by polycondensation of tetraalkylorthosilicate.
The ratio of said siloxane according to formula I and said at least one polysiloxane obtained by polycondensation of tetraalkylorthosilicate is for example 1 : 10, or 5 to 7.

In one embodiment, polysiloxanes S are obtained by polycondensation of siloxanes according to formula I and at least one polysiloxane obtained by polycondensation of tetraethylorthosilicate.

In one embodiment, polysiloxanes S are obtained by polycondensation of siloxanes according to formula I and at least one polytetraalkylorthosilicate.
In one embodiment, polysiloxanes S are obtained by polycondensation of siloxanes according to formula I and at least one polytetraethylorthosilicate (pTEOS).
Another aspect of the invention are processes for making polymers P wherein at least one hydroxy terminated polyaryleneether HA is reacted with at least one siloxane S, wherein said siloxane S is a polysiloxane prepared from tetraorthosilicate and at least one siloxane according to formula I 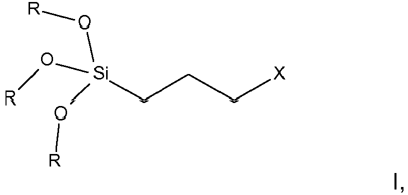 wherein R is C1 to C4 alkyl group and X is a leaving group.

In one embodiment, processes according to the invention comprise a step in which hydroxy terminated polyaryleneether HA is at least partly deprotonated using a base BP prior to or during the reaction with said at least one siloxane S.

In one embodiment, said base BP is selected from sodiumhydride, potassium hydroxide, complex hydrides like alanates or borohydrides, alkyl lithium compounds like butyl lithium or methyl lithium.

Polymers P are easy and economical to make.

Polymers P allow for the manufacture of membranes with excellent antifouling properties and mechanical strength.

Polymers P allow for the manufacture of membranes with excellent properties with respect to the decrease of flux through a membrane over time and their fouling and biofouling properties. Polymers P allow for the manufacture of membranes with a long lifetime.

Polymers P allow for the manufacture of membranes better compaction and improved mechanical strength, for example based on waterflux and pressure burst test.

Another aspect of the invention are membranes M comprising 0.1 to 49 % by weight of at least one polymer P according to claims 1 to 6.

The concept of a membrane is generally known in the art. In the context of this application, a membrane shall be understood to be a thin, semipermeable structure capable of separating two fluids or separating molecular and/or ionic components or particles from a liquid. A membrane acts as a selective barrier, allowing some particles, substances or chemicals to pass through while retaining others.

Membranes M can for example be microporous (average pore diameter smaller than 2 nm), mesoporous (average pore diameter from 2 nm to 50 nm) or macroporous (average pore diameter above 50 nm). Average pore diameters in this context are determined according to DIN 14652:2007-09 through correlation with the molecular weight cutoff of a membrane.

In a preferred embodiment, membranes M and/or the separation layer and/or support layer of membranes M normally comprise organic polymers, hereinafter referred to as polymers A as the main components. A polymer shall be considered the main component of a membrane if it is comprised in said membrane or in the separation layer of said membrane in an amount of at least 50 %by weight, preferably at least 60%, more preferably at least 70%, even more preferably at least 80% and particularly preferably at least 90% by weight.

Polymers A are different from polymers P. In particular, polymer A does not comprise any siloxane groups.

In one embodiment, membranes M comprise one layer, for example the separation layer in UF or MF membranes or the support layer in FO or RO membranes, comprising as the main component at least one polymer A.
Polymer A is selected from polyamide (PA), polyvinylalcohol (PVA), Cellulose Acetate (CA), Cellulose Triacetate (CTA), CA-triacetate blend, Cellulose ester, Cellulose Nitrate, regenerated Cellulose, aromatic , aromatic/aliphatic or aliphatic Polyamide, aromatic, aromatic/aliphatic or aliphatic Polyimide, Polybenzimidazole (PBI), Polybenzimidazolone (PBIL), Polyacrylonitrile (PAN), PAN-poly(vinyl chloride) copolymer (PAN-PVC), PAN-methallyl sulfonate copolymer, Poly(dimethylphenylene oxide) (PPO), Polycarbonate, Polyester, Polytetrafluroethylene (PTFE), Poly(vinylidene fluoride) (PVDF), Polypropylene (PP), Polyelectrolyte complexes, Poly(methyl methacrylate) PMMA, Polydimethylsiloxane (PDMS), aromatic, aromatic/aliphatic or aliphatic polyimide urethanes, aromatic, aromatic/aliphatic or aliphatic polyamidimides, crosslinked polyimides or polyarylene ether, polysulfone (PSU), polyphenylenesulfone (PPSU) or polyethersulfone (PESU), or mixtures thereof.

Preferably, polymer A is selected from polyarylene ethers, especially preferably polysulfones (PSU), polyphenylenesulfones (PPSU) or polyethersulfones (PESU), or mixtures thereof.

Preferably, membranes M a comprise one layer, for example the separation layer in UF or MF membranes or the support layer in FO and RO membranes, comprising polyaryleneethers like polysulfones, polyethersulfones (PES), polyphenylenesulfones or mixtures thereofas the main component.

Suitable polyethersulfones can for example be obtained from BASF SE under the brand name Ultrason®.

In one embodiment, membranes M comprise 0.1 to 49 % by weight of at least one polymer P and 50 to 99.9 % by weight of at least one polymer A.

In one embodiment, the support layer of RO or FO membranes M comprise 0.1 to 49 % by weight of at least one polymer P and 50 to 99.9 % by weight of at least one polymer A.

Preferred polymers A are in particular polyaryleneethers A with the same preferences as for hydroxy terminated polyarylene ethers HA as given above. In addition to polymer disclosed above as hydroxy terminated polyarylene ethers HA, polyarylene ethers A need not be hydroxy terminated.

Membranes M can for example be membranes suitable as reverse osmosis (RO) membranes, forward osmosis (FO) membranes, nanofiltration (NF) membranes, ultrafiltration (UF) membranes or microfiltration (MF) membranes. These membrane types are generally known in the art.

FO membranes are normally suitable for treatment of seawater, brackish water, sewage or sludge streams. Thereby pure water is removed from those streams through a FO membrane into a so-called draw solution on the backside of the membrane having a high osmotic pressure. Typically, FO type membranes, similar as RO membranes separate liquid mixtures via a solution diffusion mechanism, where only water can pass the membrane whereas monovalent ions and larger components are rejected.

In a preferred embodiment, FO membranes M are thin film composite (TFC) FO membranes. Preparation methods and use of thin film composite membranes are principally known and, for example described by R. J. Petersen in Journal of Membrane Science 83 (1993) 81-150.

In a further preferred embodiment, FO membranes M comprise a support layer, a separation layer and optionally a protective layer. Said protective layer can be considered an additional coating to smoothen and/or hydrophilize the surface.

Said fabric layer can for example have a thickness of 10 to 500 µm. Said fabric layer can for example be a woven or nonwoven, for example a polyester nonwoven.
Said support layer of a TFC FO membrane M normally comprises pores with an average pore diameter of for example 0.5 to 100 nm, preferably 1 to 40 nm, more preferably 5 to 20 nm. Said support layer can for example have a thickness of 5 to 1000 µm, preferably 10 to 200 µm. Said support layer may for example comprise a main component at least one polymer A, preferably at least one polysulfone, polyethersulfone, polyphenylenesulfone (PPSU), PVDF, polyimide, polyimideurethane or cellulose acetate. Nano particles such as zeolites, particularly zeolite LTA, may be comprised in said support membrane. This can for example be achieved by including such nano particles in the dope solution for the preparation of said support layer.
Said separation layer can for example have a thickness of 0.05 to 1 µm, preferably 0.1 to 0.5 µm, more preferably 0. 15 to 0.3 µm. Preferably, said separation layer can for example comprise polyamide or cellulose acetate as the main component.
Optionally, TFC FO membranes M can comprise a protective layer with a thickness of 5 to 500 preferable 10 to 300 nm. Said protective layer can for example comprise polyvinylalcohol (PVA) as the main component. In one embodiment, the protective layer comprises a halamine like chloramine.

In one preferred embodiment, membranes M are TFC FO membranes comprising a support layer comprising polyethersulfone as main component and polymer P, a separation layer comprising polyamide as main component and optionally a protective layer comprising polyvinylalcohol as the main component.

In a preferred embodiment FO membranes M comprise a separation layer obtained from the condensation of a polyamine and a polyfunctional acyl halide. Said separation layer can for example be obtained in an interfacial polymerization process.

RO membranes are normally suitable for removing molecules and ions, in particular monovalent ions. Typically, RO membranes separate mixtures based on a solution/diffusion mechanism.

In a preferred embodiment, membranes M are thin film composite (TFC) RO membranes. Preparation methods and use of thin film composite membranes are principally known and, for example described by R. J. Petersen in Journal of Membrane Science 83 (1993) 81-150.
In a further preferred embodiment, RO membranes M comprise a fabric layer, a support layer, a separation layer and optionally a protective layer. Said protective layer can be considered an additional coating to smoothen and/or hydrophilize the surface

Said fabric layer can for example have a thickness of 10 to 500 µm. Said fabric layer can for example be a woven or nonwoven, for example a polyester nonwoven.
Said support layer of a TFC RO membrane normally comprises pores with an average pore diameter of for example 0.5 to 100 nm, preferably 1 to 40 nm, more preferably 5 to 20 nm. Said support layer can for example have a thickness of 5 to 1000 µm, preferably 10 to 200 µm. Said support layer may for example comprise a main component at least one polymer A, preferably at least one polysulfone, polyethersulfone, polyphenylenesulfone (PPSU), PVDF, polyimide, polyimideurethane or cellulose acetate. Nano particles such as zeolites, particularly zeolite LTA, may be comprised in said support membrane. This can for example be achieved by including such nano particles in the dope solution for the preparation of said support layer.
Said separation layer can for example have a thickness of 0.02 to 1 µm, preferably 0.03 to 0.5 µm, more preferably 0.05 to 0.3 µm. Preferably, said separation layer can for example comprise polyamide or cellulose acetate as the main component.
Optionally, TFC RO membranes M can comprise a protective layer with a thickness of 5 to 500 preferable 10 to 300 nm. Said protective layer can for example comprise polyvinylalcohol (PVA) as the main component. In one embodiment, the protective layer comprises a halamine like chloramine.

In one preferred embodiment, membranes M are TFC RO membranes comprising a nonwoven polyester fabric, a support layer comprising polyethersulfone as main component and polymer P, a separation layer comprising polyamide as main component and optionally a protective layer comprising polyvinylalcohol as the main component.

In a preferred embodiment RO membranes M comprise a separation layer obtained from the condensation of a polyamine and a polyfunctional acyl halide. Said separation layer can for example be obtained in an interfacial polymerization process.

Suitable polyamine monomers can have primary or secondary amino groups and can be aromatic (e. g. a diaminobenzene, a triaminobenzene, m-phenylenediamine, p-phenylenediamine, 1, 3, 5-triaminobenzene, 1,3,4-triaminobenzene, 3, 5-diaminobenzoic acid, 2, 4-diaminotoluene, 2, 4-diaminoanisole, and xylylenediamine) or aliphatic (e. g. ethylenediamine, propylenediamine, piperazine, and tris(2-diaminoethyl)amine).

Suitable polyfunctional acyl halides include trimesoyl chloride (TMC), trimellitic acid chloride, isophthaloyl chloride, terephthaloyl chloride and similar compounds or blends of suitable acyl halides. As a further example, the second monomer can be a phthaloyl halide.

In one embodiment of the invention, a separation layer of polyamide is made from the reaction of an aqueous solution of meta-phenylene diamine (MPD) with a solution of trimesoyl chloride (TMC) in an apolar solvent.

NF membranes are normally especially suitable for removing separate multivalent ions and large monovalent ions. Typically, NF membranes function through a solution/diffusion or/and filtration-based mechanism.

NF membranes are normally used in cross filtration processes.

NF membranes M can for example comprise as the main component at least one polymer A, preferably polyarylene ether, polysulfone, polyethersulfones (PES), polyphenylensulfone (PPSU) or mixtures thereof. In a preferred embodiment, said main components of NF membranes are positively or negatively charged.

Nanofiltration membranes M often comprise charged polymers comprising sulfonic acid groups, carboxylic acid groups and/or ammonium groups.

UF membranes are normally suitable for removing suspended solid particles and solutes of high molecular weight, for example above 1000 Da. In particular, UF membranes are normally suitable for removing bacteria and viruses.

UF membranes M normally have an average pore diameter of 0.5 nm to 50 nm, preferably 1 to 40 nm, more preferably 5 to 20 nm.
UF membranes M can for example comprise as main component at least one polymer A, preferably at least one polyarylene ether, polysulfone, polyethersulfone (PES), polyphenylenesulfone (PPSU) or mixtures thereof.

In one embodiment, UF membranes M comprise further additives like polyvinyl pyrrolidones.

In one embodiment, UF membranes M comprise further additives like block copolymers of polyarylene sulfones and alkyleneoxides like polyethyleneoxide.

In a preferred embodiment, UF membranes M comprise as major components polysulfones, polyphenylenesulfones or polyethersulfones in combination with further additives like polyvinylpyrrolidone.

In one preferred embodiment, UF membranes M comprise 80 to 50% by weight of polyethersulfone and 20 to 50 %by weight of polyvinylpyrrolidone.
In another embodiment UF membranes M comprise 95 to 80% by weight of polyethersulfone and 5 to 15 % by weight of polyvinylpyrrolidone.
In another embodiment UF membranes M comprise 99.9 to 80% by weight of polyethersulfone and 0.1 to 20 % by weight of polyvinylpyrrolidone.

In one embodiment of the invention, UF membranes M are present as spiral wound membranes.
In another embodiment of the invention, UF membranes M are present as tubular membranes. In another embodiment of the invention, UF membranes M are present as flat sheet membranes.

In another embodiment of the invention, UF membranes M are present as hollow fiber membranes.
In yet another embodiment of the invention, UF membranes M are present as single bore hollow fiber membranes.
In yet another embodiment of the invention, UF membranes M are present as multi bore hollow fiber membranes.

MF membranes are normally suitable for removing particles with a particle size of 0.1 µm and above.

MF membranes M normally have an average pore diameter of 0.1 µm to 10 µm, preferably 1.0 µm to 5 µm.

Microfiltration can use a pressurized system but it does not need to include pressure.

MF membranes M can be hollow fibers, flat sheet, tubular, spiral wound, hollow fine fiber or track etched. They are porous and allow water, monovalent species (Na⁺, Cl⁻), dissolved organic matter, small colloids and viruses through while retaining particles, sediment, algae or large bacteria.
Microfiltration systems are designed to remove suspended solids down to 0.1 micrometres in size, in a feed solution with up to 2-3% in concentration.

MF membranes M can for example comprise as the main component at least one polymer A, preferably at least one polyarylene ether, polysulfone, polyethersulfone (PES), polyphenylenesulfone (PPSU) or mixtures thereof.

Preferably, membrane M is a UF membrane, NF membrane, RO membrane, FO membrane or MF membrane.

Processes for making membranes M preferably comprise the following steps:
a) Providing a dope solution D comprising (if this type of Si-based PESU is also miscible not only PESU but also other polymers, we should cover this possibility)
   i) 51 to 99.9 % by weight at least one polymer A,
   ii) 0.1 to 49 % by weight of at least one polymer P,
   iii) 0 to 49 % by weight of further additives,
   wherein weight percentages are based on the combination of components i) to iii).
b) Bringing dope solution D into contact with at least one coagulant.

Especially preferably, processes for making membranes M preferably comprise the following steps:
a) Providing a dope solution D comprising (if this type of Si-based PESU is also miscible not only PESU but also other polymers, we should cover this possibility)
   i) 51 to 99.9 % by weight at least one polyaryleneether A, especially selected from polysulfone, polyethersulfone (PES), polyphenylenesulfone (PPSU) or mixtures thereof,
   ii) 0.1 to 49 % by weight of at least one polymer P,
   iii) 0 to 49 % by weight of further additives,
   wherein weight percentages are based on the combination of components i) to iii).
b) Bringing dope solution D into contact with at least one coagulant.

Membranes M show excellent properties with respect to the decrease of flux through a membrane over time and their fouling and biofouling properties.
Membranes M are easy and economical to make.
Filtration systems and membranes according to invention can be made using aqueous or alcoholic systems and are thus environmentally friendly. Furthermore, leaching of toxic substances is not problematic with membranes M.
Membranes M have a long lifetime.
Membranes M show excellent mechanical strength, for example with respect to their low rate of rupture and the ability to stand high pressure.

Membranes M can for example be used for treating industrial waste water, municipal waste water, sea water, brackish water, fluvial water, surface water, drinking water, mining water, waste water from oil wells or power plants.

In one preferred embodiment of the invention, membranes M, particularly RO, FO or NF membranes are used for the desalination of sea water or brackish water.

Membranes M, particularly RO, FO or NF membranes are used for the desalination of water with a particularly high salt content of for example 3 to 8 % by weight. For example membranes M are suitable for the desalination of water from mining and oil/gas production and fracking processes, to obtain a higher yield in these applications.

Different types of membrane according to the invention can also be used together in hybrid systems combining for example RO and FO membranes, RO and UF membranes, RO and NF membranes, RO and NF and UF membranes, NF and UF membranes.

In another preferred embodiment, membranes M, particularly NF, UF or MF membranes are used in a water treatment step prior to the desalination of sea water or brackish water.

In another preferred embodiment membranes M, particularly NF, UF or MF membranes are used for the treatment of industrial or municipal waste water.

Membranes M, particularly RO and/or FO membranes can be used in food processing, for example for concentrating, desalting or dewatering food liquids (such as fruit juices), for the production of whey protein powders and for the concentration of milk, the UF permeate from making of whey powder, which contains lactose, can be concentrated by RO, wine processing, providing water for car washing, making maple syrup, during electrochemical production of hydrogen to prevent formation of minerals on electrode surface, for supplying water to reef aquaria.

Membranes M, particularly UF membranes can be used in medical applications like in dialysis and other blood treatments, food processing, concentration for making cheese, processing of proteins, desalting and solvent-exchange of proteins, fractionation of proteins, clarification of fruit juice, recovery of vaccines and antibiotics from fermentation broth, laboratory grade water purification, drinking water disinfection (including removal of viruses), removal of endocrines and pesticides combined with suspended activated carbon pretreatment.

Membranes M, particularly RO, FO, NF membranes can be used for rehabilitation of mines, homogeneous catalyst recovery, desalting reaction processes.

Membranes M, particularly NF membranes, can be used for separating divalent ions or heavy and/or radioactive metal ions, for example in mining applications, homogeneous catalyst recovery, desalting reaction processes.

### Examples

### Used materials and Abbreviations

rbf round bottom flask
TEOS Tetraethyl orthosilicate
PTEOS polytetraethyl orthosilicate
IPTMS 3-lodopropyltrimethoxysilane
PIPTMS Poly(3-lodopropyltrimethoxysilane)
TETRAKIS titanium trimethylsiloxide
PES polyethersulfone
PVP polyvinylpyrrolidone
NaH sodium hydride
DMF dimethylformamide
D.I. water deionized water
Ultrason E3010 Polyethersulfone with molecular weight 58kD (Mw) and poly dispersity (Mw/Mn) of 3.3
Luvitec K90 Poly(vinylpyrrolidone) with Mw of 1400kDa and relative viscosity of 5.09
PES-P (IPTMS) Polyethylene-sulfone-poly(3-Iodopropyltrimethoxysilane)-Synthesised additive copolymer

### Example 1: Synthesis of Hyperbranched Polysiloxanes (PTEOS)

A rbf containing a solution of 32 mL (144 mmol) of Tetraethyl orthosilicate (TEOS) was mixed with 15 mL (167.6 mmol, 1.13 equiv.) of acetic anhydride and 0.4 mL (0.86 mmol, 0.006 equiv. wrt TEOS) of titanium trimethylsiloxide was with a distillation set up. The mixture was heated to 135 °C in a silicon oil bath under intensive stirring.
Addition sequence: Acetic anhydride, Tetrakis, TEOS

### Example 2: Synthesis of Hyperbranched Polysiloxanes (PTEOS-IPTMS)

A rbf containing a solution of 96 mL (0.432 mol) of Tetraethyl orthosilicate (TEOS) was mixed with 45 mL (0.475 mol; 1.1 equiv.) of acetic anhydride, 1.2 mL (2.58 mmol, 0.006 equiv.) of titanium trimethylsiloxide TETRAKIS and 28 mL of (3-lodopropyl)trimethoxysilane (0.144 mmol) was connected to a distillation set up. The mixture was heated to 135 °C in a silicon oil bath under intensive stirring.

### Example 3: Synthesis of Hyperbranched Polysiloxanes (PIPTMS)

A rbf containing a solution of 10 mL (51.07 mmol) of 3-lodopropyltrimethoxysilane (IPTMS) was mixed with 4.8 mL (51.07 mmol, 1.0 equiv.) of acetic anhydride and 0.07 mL (0.15 mmol, 0.003 equiv. wrt IPTMS) of titanium trimethylsiloxide (TETRAKIS) was with a distillation set up. The mixture was heated to 135 °C in a silicon oil bath with intensive stirring.

### Example 4:

A rbf containing a solution of 13.5 g (5 mmol -OH) of PES in 60 mL anhydrous DMF. 0.67 g (60wt% dispersion in oil; 10 mmol) of NaH was added to the flask and stirred for 30 min. Then 7.7g (5 mmol) of P(TEOS-IPTMS) was added into the reaction and stirred at 60 °C for 4h.

Reaction will then work up by precipitating out in Methanol and wash with Methanol for several times to remove unreacted compounds.

### Example 5:

A rbf containing a solution of 10.8 g (4 mmol -OH) of PES with a Mw of 5.1 kDa and an OH content of 0.63 % by weight in 80 mL anhydrous DMF. 0.16 g (4 mmol) NaH, used as 60 wt % dispersion in mineral oil was added to the flask. Then add the above mixture drop by drop into 5.8 g (20 mmol calculate as MW of monomer) of Poly(IPTMS) prepared according to example 3 in 160 mL anhydrous DMF and stirred at 60 °C for 4h.

The reaction mixture was then worked up by precipitating out in toluene and washed with acetone for several times to remove unreacted compounds and air dried to remove acetone.

### Example 6:

| **Experiment code** | **TEOS:PES (mole ratio)** | **PES (g)** | **TEOS (uL)** | **H2O (uL)** | **HCl (uL)** | **NMP (mL)** |
|---|---|---|---|---|---|---|
| **A** | 90:10 | 2g | 210 | 68 | 17.2 | 10mL |
| **B** | 74:26 | 2g | 66 | 5 | 5.4 | 10mL |
| **C** | 50:50 | 2g | 23 | 2 | 1.9 | 10mL |
| **D** | 35:65 | 2g | 13 | 1 | 1.1 | 10mL |

PES with a Mw of 5.1 kDa and an OH content of 0.63 % by weight was dissolved in NMP and then TEOS and then HCI were added. After 5 mins of HCI addition, D.I water was added. The solution was then heated for 6h at 40°C.

### Example 7:

A rbf containing a solution of 10.8 g (4 mmol -OH) of PES in 80 mL anhydrous DMF. 0.16 g (4 mmol) NaH was added to the flask. Then the above mixture was added drop by drop into 5.8 g (20 mmol calculate as MW of monomer) of poly(IPTMS) in 160 mL anhydrous DMF and stirred at 60 °C for 4h.

### Dope solution components were then be added directly into the reaction mixture.

### Example 8: Preparation of dope solutions

| Reagent | Weight % |
|---|---|
| PESU 3010 | 19 |
| PVP K90 | 6 |
| Glycerin | 10 |
| NMP | 65 |

### General dope solution preparation procedures:

### 1. Preheating

PES and PVP were heated at 110°C for 2 hours under vacuum prior to use. (Store in desiccator if not use immediately, there should be no repeated drying as it will reduce the Mw of polymers)

### 2. Dope solution addition sequence

NMP (AR grade) → Glycerin → Additive (if any) → PVP → PES

### 3. Before casting

Dope solution was heated for 2 hours at 60°C.

### 4. Membrane casting

Temperature of casting machine was set to 60°C and the glass plate and casting knife were placed on the machine for 10 mins before casting.

### 5. Coagulation process

the glass plate with dope solution casted was dipped into the coagulation bath until the formed membrane released from the glass plate.

The membrane was transferred into a box of clean D.I water. The water was changed 3 times.

### 6. Etching

Before etching, the membrane was cut with defect free circular area with diameter of 8 cm. Every piece of membrane was etched with 350mL of 2000 ppm NaOCI solution, pH 9.45 ± 0.05 (neutralized with 37% concentrated HCI). The NaOCI solution was heated in a water bath to 60°C and stabilized for 5mins, then the membranes were immersed for 2 hours.

### Example 9: Stability test of additive obtained according to Example 4

The aim of this stability test is to find out if the additive (Example 4) is stable when soaking under harsh condition such as NaOCI and NaOH as they are part of the composition in a water membrane, and during the etching process, water membranes would be soak in NaOCI solutions for 2 hours. Thus it is important to know if the additive will not degrade under this condition.

From NMR spectrum, it showed that Type 1 Additive is stable under harsh condition.

### Example 10: Evaluation of the mechanical strength of membranes obtained according to example 4

Comparison studies on mechanical strength behaviour between the Standard PES flat sheet membrane and Additive incorporated PES flat sheet membrane showed that with increasing amount of Example 4 added, there is an increase in the E-modulus which signifies the increasing of mechanical strength.

Comparison studies on elongation strength behaviour between the Standard PES flat sheet membrane and Additive incorporated PES flat sheet membrane showed that with increasing amount of Example 4 added, there is not much compromisation in the E-modulus, thus proving that the addition of Example 4 did not cause the membrane to become more brittle.

### Graph 3: Nanoindentation result of dense film with Example 4

Comparison studies on nanoindentation measurement between the Standard PES flat sheet membrane and Additive incorporated PES flat sheet membrane showed that the flat sheet membrane with Example 4 added is much more consistent and homogeneous than the Standard PES flat sheet membrane.

**Table 1: Water Flux (PWP) and Molecular Weight Cut Off (MWCO) studies on flat sheet membrane of different solid content and condition.**

| **Blank dope (wt% of PES)** | **Series** | **Condition** | **Water flux (LMH.bar)** | **MWCO (kDa)** |
|---|---|---|---|---|
| 19% | 1 | 200µm (std) | 1200 ± 100 | 215 ± 25 |
| | | 200µm 2.5h, 5 bar | 1000 ± 100 | 125 ± 25 |
| | 3 | 300µm (std) | 1000 ± 200 | 115 ± 25 |
| | | 300µm, 2.5h, 5 bar | - | - |
| 17% | 5 | 200µm (std) | 1650 ± 150 | 600 |
| | | 200µm, 2.5h, 5 bar | 1900 ± 100 | 600 |
| | 7 | 300µm (std) | 1100 ± 200 | 230 ± 50 |
| | | 300µm, 2.5h, 5 bar | 1550 ± 150 | 300 ± 20 |
| 15% | 9 | 200µm (std) | 2050 ± 150 | 600 |
| | | 200µm, 2.5h, 5 bar | 2200 ± 200 | 500 ± 50 |
| | 11 | 300µm (std) | 1750 ± 150 | 355 ± 35 |
| | | 300µm, 2.5h, 5 bar | 2550 ± 150 | 600 |

| With additive (wt% of PES) | Series | condition | Water flux (LMH.bar) | MWCO (kDa) |
|---|---|---|---|---|
| 17% PES + 2% Additive | 2 | 200µm (std) | 950 ± 150 | 225 ± 25 |
| | | 200µm, 2.5h, 5 bar | 1150 ± 150 | 170 ± 10 |
| | 4 | 300µm (std) | 1000 ± 200 | 135 ± 25 |
| | | 300µm, 2.5h, 5 bar | - | - |
| 15% PES + 2% Additive | 6 | 200µm (std) | 1700 ± 100 | 200 |
| | | 200µm, 2.5h, 5 bar | 1800 ± 100 | 295 ± 25 |
| | 8 | 300µm (std) | 1250 ± 150 | 265 ± 35 |
| | | 300µm, 2.5h, 5 bar | 1400 ± 100 | 220 ± 10 |
| 13% PES + 2% Additive | 10 | 200µm (std) | 2100 ± 100 | 700 |
| | | 200µm, 2.5h, 5 bar | 2450 ± 150 | 700 |
| | 12 | 300µm (std) | 2000 ± 100 | 700 |
| | | 300µm, 2.5h, 5 bar | 2400 ± 100 | 700 |

| | | | | |
|---|---|---|---|---|
| std = ard stand-condition (room temperature, 1 Bar) 2.5h, 5B = compacted at 2.5 hours at 5 Bar with compressed air wt% additive contributed to total PES content | | | | |

From **Table 1**, comparing series 1,2,3 and 4, flat sheet membrane with 2% additive showed that the PWP and MWCO performance are in the same range as flat sheet with 19% PES. Comparing series 5 and 6, the flat sheet membrane with 2% additive outperformed the 17% PES flat sheet membrane in terms of the MWCO and even after compaction. At a thicker thickness (300um), series 7 and 8 showed similar performance before compaction in the PWP and MWCO studies. However, after compaction at 5bar for 2.5hrs, series 8 is performing better than series 7 in terms of the MWCO value. For series 9,10,11 and 12, the flat sheet membranes are not performing in the ultrafiltration range, and therefore are not suitable in the claimed application.

### Single hollow fiber membrane fabrication using additive PES-P (IPTMS)

Single hollow fiber membrane fabrication and studies of water permeability, molecular weight cut off and withstanding pressure of membranes via pressure burst test etc has been studied to compare the performance of the synthesized additive PES-P(IPTMS) with blank hollow fiber membranes (without additive)

### Example 1 Single hollow fiber fabrication and testing (compared with and without additive PES-P (IPTMS))

Dope solutions with the following compositions were prepared.

**Table 1. Dope compositions of standard and PES-P (IPTMS)-incorporated membranes**

| **Membrane ID** | **PESU3010 (wt%)** | **PVP K90 (wt%)** | **Glycerin (wt%)** | **NMP (wt%)** | **Additive (wt%)** | **Viscosity (mPa.s)** |
|---|---|---|---|---|---|---|
| **Standard membrane** | 19 | 6 | 10 | 65 | - | 51125 ± 512 (clear dope) |
| **PES-P(PITMS)-incorporated membrane-1** | 17 | 6 | 10 | 65 | 2 | 63375 ± 162 (clear dope) |
| **PES-P(PITMS)-incorporated membrane-2** | 16 | 6 | 10 | 65 | 3 | 76125 ± 150 (clear dope) |

Viscosity of dope solution was measured using Brookfield Dial Reading Viscometer, RVT Model with spindle number SC4-27. 7mL to 8mL of dope solution is poured into the removal chamber and measured at room temperature (∼25°C), with varying speed ranging from 0.5rpm to 4rpm. Three readings are taken for each measurement and average up.

The dope solutions were left to stir overnight till a homogeneous solution was obtained. Subsequently, the dope solution was poured into the ISCO pump and left overnight for degassing. Prior to spinning, the dope solutions were heated at 60°C in the jacketed ISCO pump. Hollow fibers were fabricated with the following spinning conditions with an in-house hollow fiber spinning line. The dope solution was extruded through a spinneret and entered a coagulation bath filled with tap water at 50°C.

**Table 2. Spinning conditions for standard membrane 1**

| **Condition** | **UF-HF-STD-A** | **UF-HF-STD-B** | **UF-HF-STD-C** |
|---|---|---|---|
| **Dope composition (wt%)** | PESU E3010/PVP K90/Glycerin/NMP=19/6/10/65 | | |
| **Dope flow rate (ml/min)** | 3 | | |
| **Bore composition (wt%)** | water | NMP/water=10/90 | NMP/water=20/80 |
| **Bore flow rate (ml/min)** | 3 | | |
| **Air gap (cm)** | 20 | | |
| **Take up speed (cm/s)** | 6 | | |
| **External coagulant (wt%)** | Tap water (50 ± 2 °C) | | |

**Table 3. Spinning conditions for 3 & 2 wt% PESU-P(IPTMS) incorporated membrane**

| **Condition** | **UF-HF-PES-P(IPTMS)-1A** | **UF-HF-PES-P(IPTMS)-1B** | **UF-HF-PES-P(IPTMS)-1C** |
|---|---|---|---|
| **Dope composition (wt%)** | PESU E3010/PVP K90/Glycerin/NMP/PESU-P(PIPTMS) = 16/6/10/65/3 | | |
| | PESU E3010/PVPK90/Glycerin/NMP/PESU-P(IPTMS)=17/6/10/65/2 | | |
| **Dope flow rate (ml/min)** | 3 | | |
| **Bore composition (wt%)** | water | NMP/water=10/9 0 | NMP/water=20/80 |
| **Bore flow rate (ml/min)** | 3 | | |
| **Air gap (cm)** | 20 | | |
| **Take up speed (cm/s)** | 6 | | |
| **External coagulant (wt%)** | Tap water (50 ± 2 °C) | | |

The as-spun hollow fibers were immersed in deionized (DI) water overnight to ensure complete solvent exchange. The hollow fibers were then etched in 2000ppm sodium hypochlorite solution at 60 degree Celsius for 2 hours, followed by rinsing in DI water for 3 times at 30 minutes intervals. Hollow fibers were then immersed in 50/50 wt% water/glycerol solution for 48 hours. 5 hollow fibers were selected and assembled for each module and the module ends were potted with epoxy. The hollow fiber modules were tested using an in-house ultrafiltration (UF) testing setup. Water permeability of the membranes was tested as follows:
1. DI water was used as the feed and pumped into the lumen side of the hollow fibers at 0.4L/min with a transmembrane pressure (TMP) of 0.4 bar
2. The hollow fibers were left to stabilize for 30 minutes
3. 3 permeate reading were taken and average

The molecular weight cut-off (MWCO) of the membranes was tested as follows:
1. 1000ppm PEG/PEO solution was used as the feed and pumped into the lumen side of the hollow fibers at 0.4L/min with a transmembrane pressure (TMP) of 0.15 bar
2. The hollow fibers were left to stabilize for 15 minutes
3. The feed and permeate were collected and analyzed by a gel permeation chromatography (GPC) instrument and MWCO calculated.

**Table 4. Water permeability and MWCO results of standard and 2 & 3 wt% PES-P-(IPTMS)-incorporated membranes**

| **Membrane ID** | **Water permeability (LMH/bar)** | **MWCO (kDa)** |
|---|---|---|
| 0 wt% additive | 408±7 | 172±6 |
| 2 wt% PES-P(IPTMS) incorporated membrane (UF-HF-PES-P(IPTMS)-1B) | 845 ± 25 | 66 ± 8 |
| 3 wt% PES-P(IPTMS)-incorporated membrane (UF-HF-PES-P(IPTMS)-2B) | 810 ± 10 | 105 ± 5 |

### Pressure burst test for knowing the mechanical strength of the membrane

Pressure burst test was run as follows:
1. Compressed Air cylinder was connected to the digital pressure gauge through the plastic tubing where you can read applied pressure. From the pressure gauge, tubing are connected to the acrylic tube where 5 fibers were attached in which one end of the fibers were closed using the fast epoxy glue and other end was allowed to take the compressed air in
2. Compressed Air was passed through one end at regular intervals and fixed pressures.
3. A ramp time of 3 minutes were used at each pressure
4. Burst pressure was found out from the pressure gauge where the pressure starts to drop down.

Burst pressure comparison follows:

| **Membrane Type** | **Burst Pressure range (psi)** |
|---|---|
| Blank | 73-75 |
| 2% PES-P(IPTMS) | 103-107 |
| 3% PES-P(IPTMS) | 113-115 |

Hollow fibres of blank, 2% and 3% additive were assembled into an acrylic module (5 hollow fibres in one module) where one end of the hollow fibres are closed with fast epoxy and compressed air is applied through other end which is also potted with fast epoxy at constant time intervals. Compressed air flow is increased manually at regular intervals and found out the bursting pressure. Each type of module with hollow fibres after reaching its withstanding pressure started to show a drop in pressure. From the graph it is very evident that hollow fibers with 2% and 3% PES-P (IPTMS) additive can withstand higher pressures compared to the blank membranes

## Claims

1. Polymer P prepared from at least one hydroxy terminated polyaryleneether HA and at least one siloxane S, wherein said siloxane S is a polysiloxane prepared from tetraalkylorthosilicate and at least one siloxane according to formula I 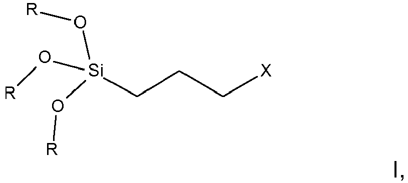 wherein R is an alkyl group and X is a leaving group.

2. Polymer according to claim 1 wherein said hydroxy terminated polyaryleneether HA is selected from polysulfone, polyphenylenesulfone or polyethersulfone.

3. Polymer according to any of claims 1 to 2, wherein R is C₁ - C₄ alkyl.

4. Polymer according to any of claims 1 to 3, wherein X is selected from Cl, Br, I, tosylate, triflate or carbonate.

5. Polymer according to any of claims 1 to 4, wherein siloxane S is a polysiloxane prepared from at least one polytetraalkylorthosilicate and at least one siloxane according to formula I 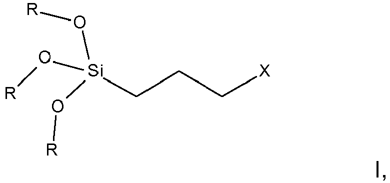 wherein R is an alkyl group and X is a leaving group.

6. Polymer according to any of claims 1 to 5, wherein siloxane S is a polysiloxane prepared from at least one polytetraethylorthosilicate and at least one siloxane according to formula I 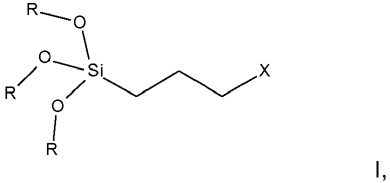 wherein R is a C₁-C₄alkyl group and X is a leaving group.

7. Process for making polymers P according to claims 1 to 6, wherein at least one hydroxy terminated polyaryleneether HA is reacted with at least one siloxane S, wherein said siloxane S is a polysiloxane prepared from tetraalkylorthosilicate and at least one siloxane according to formula I 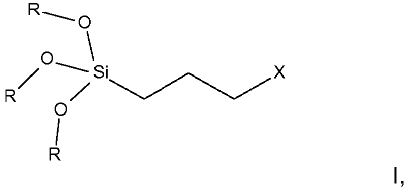 wherein R is C₁ to C₄ alkyl and X is a leaving group.

8. Membrane M comprising 0.1 to 49 % by weight of at least one polymer P according to claims 1 to 6.

9. Membrane according to claim8, wherein said membrane further comprises 50 to 99.9 % by weight of at least on polymer A different from polymer P and selected from polyamide (PA), polyvinylalcohol (PVA), Cellulose Acetate (CA), Cellulose Triacetate (CTA), CA-triacetate blend, Cellulose ester, Cellulose Nitrate, regenerated Cellulose, aromatic , aromatic/aliphatic or aliphatic Polyamide, aromatic, aromatic/aliphatic or aliphatic Polyimide, Polybenzimidazole (PBI), Polybenzimidazolone (PBIL), Polyacrylonitrile (PAN), PAN-poly(vinyl chloride) copolymer (PAN-PVC), PAN-methallyl sulfonate copolymer, Poly(dimethylphenylene oxide) (PPO), Polycarbonate, Polyester, Polytetrafluroethylene (PTFE), Poly(vinylidene fluoride) (PVDF), Polypropylene (PP), Polyelectrolyte complexes, Poly(methyl methacrylate) PMMA, Polydimethylsiloxane (PDMS), aromatic, aromatic/aliphatic or aliphatic polyimide urethanes, aromatic, aromatic/aliphatic or aliphatic polyamidimides, crosslinked polyimides or polyarylene ether, polysulfone (PSU), polyphenylenesulfone (PPSU) or polyethersulfone (PESU), or mixtures thereof.

10. Membrane according to any of claims 8 to 9 wherein membrane M is a UF membrane, NF membrane, RO membrane, FO membrane or MF membrane.

11. Process for making membranes according to any of claims 8 to 10, comprising the following steps:
a) Providing a dope solution D comprising
i) 51 to 99.9 % by weight at least one polymer A different from polymer P,
ii) 0.1 to 49 % by weight of at least one polymer P according to any of claims 1 to 10,
ii) 0 to 49 % by weight of further additives,
wherein weight percentages are based on components i) to iii),
b) bringing dope solution D into contact with at least one coagulant.

12. Use of membranes according to any of claims 8 to 10 for treating industrial waste water, municipal waste water, sea water, brackish water, fluvial water, surface water, drinking water, mining water, waste water from oil wells or power plants.

## Patentansprüche

1. Polymer P, hergestellt aus mindestens einem hydroxyterminierten Polyarylenether HA und mindestens einem Siloxan S, wobei es sich bei dem Siloxan S um ein aus Tetraalkylorthosilikat und mindestens einem Siloxan gemäß Formel I 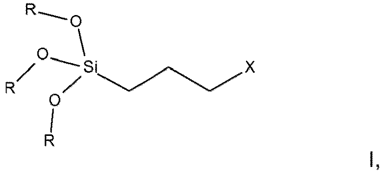 worin R für eine Alkylgruppe steht und X für eine Abgangsgruppe steht, hergestelltes Polysiloxan handelt.

2. Polymer nach Anspruch 1, wobei der hydroxyterminierte Polyarylenether HA aus Polysulfon, Polyphenylensulfon und Polyethersulfon ausgewählt ist.

3. Polymer nach einem der Ansprüche 1 bis 2, wobei R für C₁-C₄-Alkyl steht.

4. Polymer nach einem der Ansprüche 1 bis 3, wobei X aus Cl, Br, I, Tosylat, Triflat oder Carbonat ausgewählt ist.

5. Polymer nach einem der Ansprüche 1 bis 4, wobei es sich bei dem Siloxan S um ein aus mindestens einem Polytetraalkylorthosilicat und mindestens einem Siloxan gemäß Formel I 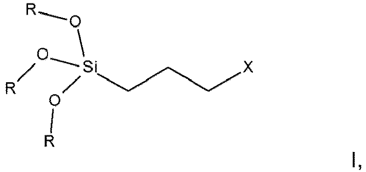 worin R für eine Alkylgruppe steht und X für eine Abgangsgruppe steht, hergestelltes Polysiloxan handelt.

6. Polymer nach einem der Ansprüche 1 bis 5, wobei es sich bei dem Siloxan S um ein aus mindestens einem Polytetraethylorthosilicat und mindestens einem Siloxan gemäß Formel I 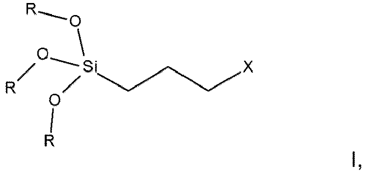 worin R für eine C₁-C₄-Alkylgruppe steht und X für eine Abgangsgruppe steht, hergestelltes Polysiloxan handelt.

7. Verfahren zur Herstellung von Polymeren P nach den Ansprüchen 1 bis 6, bei dem man mindestens einen hydroxyterminierten Polyarylenether HA mit mindestens einem Siloxan S umsetzt, wobei es sich bei dem Siloxan S um ein aus Tetraalkylorthosilikat und mindestens einem Siloxan gemäß Formel I 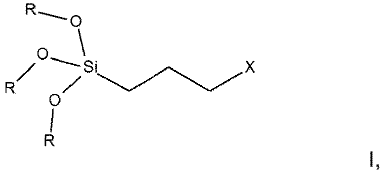 worin R für eine C₁- bis C₄-Alkylgruppe steht und X für eine Abgangsgruppe steht, hergestelltes Polysiloxan handelt.

8. Membran M, umfassend 0,1 bis 49 Gew.-% mindestens eines Polymers P nach den Ansprüchen 1 bis 6.

9. Membran nach Anspruch 8, wobei die Membran ferner 50 bis 99,9 Gew.-% mindestens eines Polymers A umfasst, das von Polymer P verschieden ist und aus Polyamid (PA), Polyvinylalkohol (PVA), Celluloseacetat (CA), Cellulosetriacetat (CTA), CA-Triacetat-Blend, Celluloseester, Cellulosenitrat, Regeneratcellulose, aromatischem, aromatischaliphatischem oder aliphatischem Polyamid, aromatischem, aromatischaliphatischem oder aliphatischem Polyimid, Polybenzimidazol (PBI), Polybenzimidazolon (PBIL), Polyacrylonitril (PAN), PAN-Polyvinylchlorid-Copolymer (PAN-PVC), PAN-Methallylsulfonat-Copolymer, Polydimethylphenylenoxid (PPO), Polycarbonat, Polyester, Polytetrafluorethylen (PTFE), Polyvinylidenfluorid (PVDF), Polypropylen (PP), Polyelektrolytkomplexen, Polymethylmethacrylat PMMA, Polydimethylsiloxan (PDMS), aromatischen, aromatisch-aliphatischen oder aliphatischen Polyimidurethanen, aromatischen, aromatisch-aliphatischen oder aliphatischen Polyamidimiden, vernetzten Polyimiden oder Polyarylenether, Polysulfon (PSU), Polyphenylensulfon (PPSU) oder Polyethersulfon (PESU), oder Mischungen davon ausgewählt ist.

10. Membran nach einem der Ansprüche 8 bis 9, wobei es sich bei der Membran M um eine UF-Membran, NF-Membran, RO-Membran, FO-Membran oder MF-Membran handelt.

11. Verfahren zur Herstellung von Membranen nach einem der Ansprüche 8 bis 10, dass die folgenden Schritte umfasst:
a) Bereitstellen einer Dope-Lösung D, umfassend
i) 51 bis 99,9 Gew.-% mindestens eines Polymers A, das von Polymer P verschieden ist,
ii) 0,1 bis 49 Gew.-% mindestens eines Polymers P nach einem der Ansprüche 1 bis 10,
iii) 0 bis 49 Gew.-% weitere Zusatzstoffe,
wobei sich die Gewichtsprozentangaben auf die Komponenten i) bis iii) beziehen,
b) Inkontaktbringen der Dope-Lösung D mit mindestens einem Koagulationsmittel.

12. Verwendung von Membranen nach einem der Ansprüche 8 bis 10 zur Behandlung von technischem Abwasser, kommunalem Abwasser, Meerwasser, Brackwasser, Flusswasser, Oberflächenwasser, Trinkwasser, Grubenwasser und Abwasser aus Ölbohrungen oder Kraftwerken.

## Revendications

1. Polymère P préparé à partir d'au moins un polyarylèneéther à terminaisons hydroxy HA et d'au moins un siloxane S, dans lequel ledit siloxane S est un polysiloxane préparé à partir d'un tétraalkylorthosilicate et d'au moins un siloxane selon la formule I 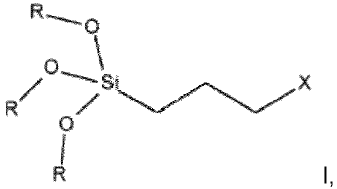 dans laquelle R est un groupe alkyle et X est un groupe partant.

2. Polymère selon la revendication 1, dans lequel ledit polyarylèneéther à terminaisons hydroxy HA est sélectionné parmi une polysulfone, une polyphénylènesulfone ou une polyéthersulfone.

3. Polymère selon l'une quelconque des revendications 1 ou 2, dans lequel R est un groupe alkyle C₁-C₄.

4. Polymère selon l'une quelconque des revendications 1 à 3, dans lequel X est sélectionné parmi Cl, Br, I, un tosylate, un triflate ou un carbonate.

5. Polymère selon l'une quelconque des revendications 1 à 4, dans lequel le siloxane S est un polysiloxane préparé à partir d'au moins un polytétraalkylorthosilicate et d'au moins un siloxane selon la formule I 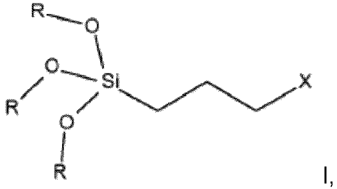 dans laquelle R est un groupe alkyle et X est un groupe partant.

6. Polymère selon l'une quelconque des revendications 1 à 5, dans lequel le siloxane S est un polysiloxane préparé à partir d'au moins un polytétraéthylorthosilicate et d'au moins un siloxane selon la formule I 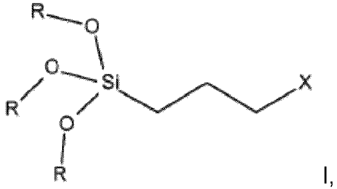 dans laquelle R est un groupe alkyle C₁-C₄ et X est un groupe partant.

7. Procédé de fabrication de polymères P selon les revendications 1 à 6, dans lequel on fait réagir au moins un polyarylèneéther à terminaisons hydroxy HA avec au moins un siloxane S, dans lequel ledit siloxane S est un polysiloxane préparé à partir de tétraalkylorthosilicate et d'au moins un siloxane selon la formule I 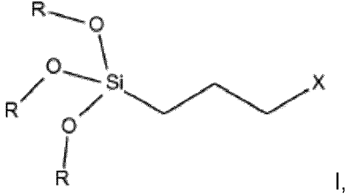 dans laquelle R est un groupe alkyle C₁-C₄ et X est un groupe partant.

8. Membrane M comprenant 0,1 à 49 % en poids d'au moins un polymère P selon les revendications 1 à 6.

9. Membrane selon la revendication 8, ladite membrane comprenant en outre 50 à 99,9 % en poids d'au moins un polymère A différent du polymère P et sélectionné parmi le polyamide (PA), l'alcool polyvinylique (PVA), l'acétate de cellulose (CA), le triacétate de cellulose (CTA), un mélange de CA-triacétate, un ester de cellulose, le nitrate de cellulose, une cellulose régénérée, un polyamide aromatique, aromatique/aliphatique ou aliphatique, un polyimide aromatique, aromatique/aliphatique ou aliphatique, le polybenzimidazole (PBI), la polybenzimidazolone (PBIL), le polyacrylonitrile (PAN), un copolymère de PAN-poly(chlorure de vinyle) (PAN-PVC), un copolymère de PAN-sulfonate de méthallyle, le poly(oxyde de diméthylphénylène) (PPO), un polycarbonate, un polyester, le polytétrafluroéthylène (PTFE), le poly(fluorure de vinylidène) (PVDF), le polypropylène (PP), des complexes de polyélectrolytes, le poly(méthacrylate de méthyle) (PMMA), le polydiméthylsiloxane (PDMS), des uréthanes polyimides aromatiques, aromatiques/aliphatiques ou aliphatiques, des polyamidimides aromatiques, aromatiques/aliphatiques ou aliphatiques, des polyimides ou un polyarylène-éther réticulés, la polysulfone (PSU), la polyphénylènesulfone (PPSU) ou la polyéthersulfone (PESU), ou des mélanges de ceux-ci.

10. Membrane selon l'une quelconque des revendications 8 ou 9, la membrane M étant une membrane d'ultrafiltration, une membrane de nanofiltration, une membrane d'osmose inverse, une membrane d'osmose directe ou une membrane de microfiltration.

11. Procédé de fabrication de membranes selon l'une quelconque des revendications 8 à 10, comprenant les étapes suivantes :
a) la fourniture d'une solution filable ou coulable D comprenant :
i) 51 à 99,9 % en poids d'au moins un polymère A différent du polymère P,
ii) 0,1 à 49 % en poids d'au moins un polymère P selon l'une quelconque des revendications 1 à 10,
iii) 0 à 49 % en poids d'additifs supplémentaires,
dans lequel les pourcentages pondéraux sont exprimés sur la base des constituants i) à iii),
b) la mise en contact de la solution filable ou coulable D avec au moins un coagulant.

12. Utilisation de membranes selon l'une quelconque des revendications 8 à 10 pour le traitement d'eaux usées industrielles, d'eaux usées municipales, d'eau de mer, d'eau saumâtre, d'eau fluviale, d'eau de surface, d'eau potable, d'eaux d'exhaure, et d'eaux résiduelles de puits de pétrole ou de centrales électriques.
